## Europäisches Patentamt

## European Patent Office

## Office européen des brevets

(19)

(11) Veröffentlichungsnummer: **0 024 466**
**B1**

(12) **EUROPÄISCHE PATENTSCHRIFT**

(45) Veröffentlichungstag der Patentschrift: **21.12.83**

(51) Int. Cl.³: **C 03 C 17/36, E 06 B 3/66**

(21) Anmeldenummer: **80101432.5**

(22) Anmeldetag: **19.03.80**

(54) Wärmereflektionsscheibe und deren Verwendung als Aussenscheibe einer Mehrscheibenanordnung.

(30) Priorität: **20.06.79 DE 2924824**

(43) Veröffentlichungstag der Anmeldung:
**11.03.81 Patentblatt 81/10**

(45) Bekanntmachung des Hinweises auf die Patenterteilung:
**21.12.83 Patentblatt 83/51**

(84) Benannte Vertragsstaaten:
**AT BE CH FR GB IT NL SE**

(56) Entgegenhaltungen:
**DE - A - 1 596 810**
**DE - A - 1 911 036**
**DE - A - 2 138 517**
**DE - A - 2 256 441**
**DE - A - 2 309 288**
**FR - A - 2 169 356**
**US - A - 3 514 175**

(73) Patentinhaber: **BFG GLASSGROUP**
**7, Rue de Teheran**
**F-75008 Paris (FR)**

(72) Erfinder: **von Reis, Wolf, Dipl.-Ing.**
**Steeler Strasse 34**
**D-4650 Gelsenkirchen (DE)**

(74) Vertreter: **Goddar, Heinz J., Dr.**
**FORRESTER & BOEHMERT Widenmayerstrasse 4/I**
**D-8000 München 22 (DE)**

**0 024 466**

Wärmereflexionsscheibe und deren Verwendung als Außenscheibe
einer Mehrscheibenanordnung

Die Erfindung betrifft eine Wärmereflexionsscheibe, insbesondere wärmereflektierende Fensterscheibe, mit einem transparenten Schichtträger, an dessen einer Seite eine Metalloxidschicht derartiger Zusammensetzung und Dicke angeordnet ist, daß die Reflexion im sichtbaren Spektralbereich bei Betrachtung von der Schichtseite (Außenansicht) mindestens 25%, vorzugsweise mehr als 30% beträgt, und an dessen anderer Seite eine wärmereflektierende Metallschicht, z.B. eine Goldschicht, vorgesehen ist.

Metalloxidbeschichtungen, beispielsweise auf der der Außenatmosphäre zugewandten Fläche der Außenscheibe von Mehrscheibenanordnungen, deren Einzelscheiben vorzugsweise aus Silikatglas bestehen, erhöhen insbesondere das Reflexionsvermögen im sichtbaren Spektralbereich und erzeugen hierdurch eine ästhetische Wirkung, die insbesondere dann von Bedeutung ist, wenn derartige Mehrscheibenanordnungen bei Ganzglasfassaden verwendet werden sollen, bei denen die zwischen den mit den wärmereflektierenden Isolierglasscheiben abgedeckten Fensteröffnungen liegenden Bereiche der Gebäudewand o. dgl. durch Fassadenelemente bzw. Brüstungsplatten aus Glas verkleidet werden sollen. Dabei ist es nämlich wichtig, daß die als Isolierglasscheiben verwendeten Mehrscheibenanordnungen sowohl in ihrem Farbeindruck als auch in Reflexion von der Außenseite her mit den entsprechenden Werten der Fassadenelemente bzw. Brüstungsplatten, die ihrerseits häufig eine Metalloxid-Außenbeschichtung tragen, möglichst weitgehend übereinstimmen. Die Metalloxidschichten der hier in Rede stehenden Art, die entweder Einfach- oder Mischoxidschichten hierfür geeigneter Metalle der Eisenreihe des periodischen Systems der Elemente mit den Ordnungszahlen 22 bis 28 sein können, wie beispielsweise Titanoxid-, Eisenoxid-, Kobaltoxid- oder Chromoxidschichten, und die durch eine Reihe bekannter Verfahren aufgebracht werden können, beispielsweise durch Vakuumbedampfung, im Tauchverfahren mit anschließendem Einbrennen oder auch durch pyrolytische oder hydrolytische Verfahren, sind korrosionsbeständig und können daher gefahrlos der Außenatomosphäre ausgesetzt werden. Derartige Schichten tolerieren auch hohe Temperaturen, wie sie für das Vorspannen von Fassadenelementen bzw. Brüstungsplatten benötigt werden, da im Brüstungsbereich aus Sicherheitsgründen weitgehend vorgespanntes Glas verwendet wird.

Verwendet man nun für die Abdeckung der zwischen Glas-Fassadenelementen bzw. Brüstungsplatten liegenden Fensteröffnungen Wärmereflexionsscheiben der gattungsgemäßen Art, bei denen ausschließlich an der der Außenatmosphäre ausgesetzten Fläche eine Metalloxidschicht der beschriebenen Art vorgesehen ist, so entsteht der Nachteil, daß die sonnenschutztechnischen Werte nur unbefriedigend sind, weil die Transmission im nahen Infrarotbereich, auf den ca. 50% der gesamten Sonnenenergieeinstrahlung entfallen, im allgemeinen höher ist als im sichtbaren Spektralbereich. Hieraus ergibt sich ein ungünstiges Verhältnis zwischen der Licht- und Energiedurchlässigkeit derartiger Wärmereflexionsscheiben und zwar sowohl bei der Verwendung als Einzelscheiben, als auch bei Verwendung als Außenscheibe von Mehrscheibenanordnungen.

Aus der US—A—3 514 175 ist non bereits eine Mehrscheibenanordnung mit einer Wärmereflexionsscheibe der eingangs genannten Art bekannt, bei der durch die an der dem Scheibenzwischenraum zugewandten Seite der Außenscheibe vorgesehene Goldschicht eine Verbesserung der sonnenschutztechnischen Werte gegenüber solchen Mehrscheibenanordnungen erzielt wird, wie sie vorstehend diskutiert sind und bei denen einzig an der Außenseite der Außenscheibe eine Metalloxidschicht angeordnet, ist. Der Nachteil der Mehrscheibenanordnung nach der US—A—3 514 175, bei der also die Außenscheibe an ihrer dem Scheibenzwischenraum abgewandten Außenseite eine $TiO_2$-Außenschicht und an ihrer dem Scheibenzwischenraum zugewandten Innenseite eine wärmereflektierende Goldschicht trägt, besteht nun aber darin, daß durch die Goldschicht die Reflexion zur Außenseite nicht nur hinschichtlich des Reflexionsvermögens im sichtbaren Spektralbereich, sondern auch hinsichtlich der spektralen Verteilung beeinflußt wird. Mit anderen Worten, der Farbeindruck einer Mehrscheibenanordnung nach der US—A—3 514 175 ist infolge der verwendeten wärmereflektierenden Goldschicht deutlich von demjenigen eine ausschließlich eine Metalloxidschicht an der Außenseite der Außenscheibe tragenden Mehrscheibenanordnung verschieden, wobei selbstverständlich jede Änderung der Dicke der Goldschicht, so erwünscht sie aus sonnenschutztechnischen Gründen sein mag, den Farbeindruck der Mehrscheibenanordnung bei der Ansicht von außen her verändert. Demufolge eignet sich die Mehrscheibenanordnung nach der US—A—3 514 175 nicht zur Verwendung bei Ganzglasfassaden, da es nicht möglich ist, gleichzeitig gute sonnenschutztechnischte Werte und eine Außenansicht zu erreichen, die sowohl hinsichtlich des Reflexionsvermögens als auch hinsichtlich der spektralen Reflexionsverteilung mit derjenigen der Glas-Fassadenelemente übereinstimmt, mittels welcher die zwischen den Fensteröffnungen gelegenen Bereiche der betreffenden Fassade abgedeckt sind. Für letztere Elemente können zusätzliche Goldbeschichtungen wie im Fensterbereich nicht eingesetzt werden, weil die Goldschichten keine ausreichende Abriebfestigkeit aufweisen und außerdem unter den für das Vorspannen erforderlichen hohen Temperaturen beträchtliche Schichtveränderungen erfahren.

Aus der DE—A—2 256 441 ist es weiterhin bereits bekannt, bedarfsweise zwischen einer

2

wärmereflektierenden Metallschicht, nämlich der dort vorgesehenen Silberschicht, und den transparenten Schichtträger eine Interferenzschicht anzuordnen, welche allerdings den Zweck erfüllt, die Gesamtreflexion im sichtbaren Spektralgebiet anzuheben. Die Druckschrift enthält keinen Hinweis, wie es gelingen könnte, bei Wärmereflexionsscheiben der eingang genannten Art zu einer farbneutralen Außenansicht niedriger Reflexion zu kommen.

Der Erfindung liegt die Aufgabe zugrunde, eine Wärmereflexionsscheibe der eingangs genannten Art zu schaffen, bei der durch die wärmereflektierende Metallschicht der Farbeindruck in der Außenansicht nicht verändert und gleichzeitig das Reflexionsvermögen nicht wesentlich beeinflußt werden soll. Insbesondere soll die erfindungsgemäß herzustellende Wärmereflexionsscheibe in einer wärmereflektierenden Mehrscheibenanordnung der oben beschriebenen Art verwendet sein, bei der die sonnenschutztechnischen Werte ohne Beeinflüssung der im wesentlichen durch die an der Außenseite der Außenscheibe befindliche Metalloxidschicht bestimmten Reflexion optimiert sind, wobei insbesondere bei der Optimierung der sonnenschutztechnischen Werte keine Farbverschiebung der Reflexion in der Außenansicht auftreten soll.

Erfindungsgemäß wird diese Aufgabe bei einer Wärmereflexionsscheibe der eingangsganannten Art dadurch gelöst, daß wenigstens auf der dem transparenten Schichtträger zugewandten Seite der aus einer Goldschicht mit einer Dicke von mindestens 5 nm oder einer Silberschicht mit einer Dicke von 5—8 nm bestehenden wärmereflektierenden Metallschicht eine Interferenzschicht aus dielektrischen Material mit einem Brechungsindex $>2$ angeordnet ist, wobei das gesamte, auf der der Metalloxidschicht abgewandten Seite des transparenten Schichtträgers angeordnete Schichtsystem so ausgebildet ist, daß eine damit rückseitig beschichtete Natronsilikatglas-Einzelscheibe in der Ansicht von der unbeschichteten Seite her farbneutral ist und im sichtbaren Spektralbereich eine Reflexion von weniger als 15%, vorzugsweise $<10\%$, aufweist.

Eine besonders bevorzugte Ausführungsform der Erfindung besteht in der Verwendung der vorstehen angegebenen Wärmereflexionsscheibe als Außenscheibe einer Mehrscheibenanordnung der weiter oben erörterten Art.

Weitere bevorzugte Ausfürungsformen der Erfindung ergeben sich aus den Unteransprüchen. So haben sich als Material für die Interferenzshicht insbesondere Titanoxid, Wismutoxid und Zinksulfid bewährt. Zwischen dem transparenten Schichtträger, vorzugsweise einer Silikatglasscheibe, und einer ihr benachbarten Interferenzschicht aus Zinksulfid kann eine als Haftschicht dienende Zwischenschicht angeordnet, sein, wie sie beispielsweise aus der DE—B—2 203 943 bekannt ist.

Weiterhin hat es sich als vorteilhaft erwiesen, auf der der Interferenzschicht abgewandten Seite der wärmereflektierenden Schicht eine Absorptionsschicht aus Chrom, Eisen, Nickel, Titan, Legierungen dieser Metalle oder aus einer Legierung der Metalle Chrom, Aluminium und Eisen anzuordnen, wobei die Absorptionsschicht vorzugsweise aus einer Chrom-Nickel-Legierung mit einer Zusammensetzung von 20 Gew.-% Chrom und 80 Gew.-% Nickel bestehen und eine Dicke von zwischen 0,8 und 6 nm, insbesondere von 1,3 nm, haben soll. Durch diese Absorptionsschicht ist es möglich, ohne jedwede Beeinträchtigung des Farbeindruckes der Wärmereflexionsscheibe bzw. der unter Verwendung einer derartigen Wärmereflexionsscheibe aufgebauten Mehrscheibenanordnung in der Außenansicht die sonnenschutztechnischen Werte weiter zu verbessern.

Der Erfindung liegt die überraschende Erkenntnis zugrunde, daß es gelingt, die sonnenschutztechnischen Werte der gattungsgemäßen Wärmereflexionsscheibe bzw. der beschriebenen Mehrscheibenanordnung völlig unabhängig von der Außenanschicht zu optimieren, d.h. also, die Reflexion in der Außenansicht wird durch die Innenbeschichtung des transparenten Schichtträgers bzw. der Außenscheibe nicht beeinflußt. Hierdurch ist es möglich, erfindungsgemäß hergestellte Mehrscheibenanordnungen in vorteilhafter Weise insbesondere in Verbindung mit Glas- Brüstungsplatten bwz. -Fassadenelementen zur Abdeckung der Fensteröffnungen von Ganzglasfassaden zu verwenden, weil der Farbeindruck in der Außenansicht bei gleichzeit erwünscht hohem Reflexionsvermögen trotz der der Verbesserung der sonnenschutztechnischen Werte dienenden Innenbeschichtung des transparenten Schichtträgers bzw. der Außenscheibe erhalten bleibt.

Nachfolgend werden Ausführungsbeispiele der Erfindung anhand der Schematischen Zeichnung im einzelnen erläutert. Dabei zeigt:

Fig. 1 ein erstes Ausführungsbeispiel einer wärmereflektierenden Mehrscheibenanordnung nach der Erfindung im Schnitt;

Fig. 2 eine anderes Ausführungsbeispiel einer erfindungsgemäßen Wärmereflexionsscheibe, ebenfalls im Schnitt; und

Fig. 3 eine wiederum abgewandeltes Ausführungsbeispiel einer erfindungsgemäßen Wärmereflexionsscheibe, ebenfalls im Schnitt.

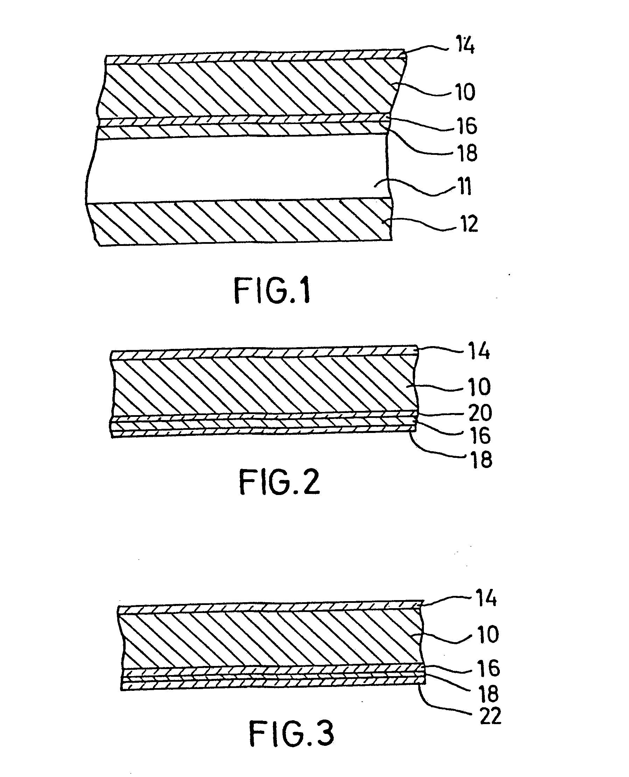

Wie Fig. 1 zeigt, besteht die Mehrscheibenanordnung nach der Erfindung bei dem dort gezeigten Ausführungsbeispiel aus einer Außenscheibe 10 und einer hiervon durch einen Scheibenzwischenraum (luft- oder gasgefüllt) 11 getrennten Innenscheibe 12, die beide aus Silikatglas bestehen. An der nach dem Anbringen der Mehrscheibenanordnung an einer Gebäudefassade oder dergleichen außenliegenden, in Fig. 1 nach oben weisenden Außenfläche der Außenscheibe 10 ist eine $TiO_2$—Schicht mit einer Dicke von 49 nm angeordnet, wobei die Dicke der Außenscheibe 10 im übrigen 8 mm beträgt. An der dem Scheibenzwischenraum 11 zugewandten Innenseite der Außenscheibe 10 sind aufeinander-

**0 024 466**

folgend eine Interferenzschicht 16 aus Zinksulfid und eine wärmereflektierende Metallschicht 18, bei dem gezeigten Ausführungsbeispiel aus Gold bestehend, mit einer Dicke von 7 nm angeordnet.

Das in Fig. 2 gezeigte Ausführungsbeispiel der erfindungsgemäßen Wärmereflexionsscheibe unterscheidet sich von dem in Fig. 1 gezeigten dadurch, daß hier zwischen der Interferenzschicht 16 und der Außenscheibe 10 eine dünnen Haftschicht aus SiO$_2$ angeordnet ist, wie sie schon weiter oben diskutiert wurde.

Bei dem in Fig. 3 gezeigten Ausführungsbeispiel schließlich sind an der dem Scheibenzwischenraum zugewandten Innenseite der Außenscheibe 10 von dieser aus aufeinanderfolgend die Interferenzschicht 16, die wärmereflektierende Metallschicht, hier aus Gold bestehend, 18 und eine Absorptionsschicht 22 angeordnet, die aus einer Chrom-Nickel-Legierung besteht.

Vergleichsversuche haben zu den nachstehenden Ergebnissen geführt:

Vergleichsversuch 1

Eine Einfach-Natonsilikatglasscheibe von 8 mm Dicke wurde an der Außenseite mit einer TiO$_2$-Schicht mit einer Dicke von 49 nm versehen. Die so hergestellte Scheibe wies folgende technische Werte auf:

| | |
|---|---|
| Lichtdurchlässigkeit (bezogen auf die Hellempfindlichkeit des menschlichen Auges) | = 58,2% |
| Transmission für die Gesamtstrahlung der Sonne | = 59% |
| Reflexion für die Gesamtstrahlung der Sonne | = 29,4% |
| Visuelle Reflexion in der Außenansicht (von der beschichteten Seite her gesehen) | = 40,2% |

Beispiel 1

Es wurde eine Scheibe wie beim Vergleichsversuch 1 verwendet, wobei aber auf der der TiO$_2$-Schicht abgewandten Innenseite eine zusätzliche Beschichtung vorgesehen war, bestehend aus einer dünnen Haftschicht aus Siliciumoxid, wie sie in der DE—B—22 03 943 beschrieben ist, einer Zinksulfid-Interferenzschicht und einer daran anschließenden wärmereflektierenden Goldschicht mit einer Dicke von 7 nm. Dabei ergaben sich folgende technische Werte:

| | |
|---|---|
| Lichtdurchlässigkeit (bezogen auf die Hellempfindlichkeit des menschlichen Auges) | = 43,1% |
| Transmission für die Gesamtstrahlung der Sonne | = 35,4% |
| Reflexion für die Gesamtstrahlung der Sonne | = 36,5% |
| Visuelle Reflexion in der Außenansicht (von der beschichteten Seite her gesehen) | = 42,5% |

Dies zeigt, daß sich durch die zusätzliche Beschichtung, die erfindungsgemäß vorgenommen wurde, die visuelle Reflexion praktisch nicht verändert hat. Auch Farbveränderungen gegenüber der Scheibe nach dem Vergleichsversuch 1 waren nicht zu beobachten. Demgegenüber sind die sonnenschutztechnischen Werte deutlich gegenüber dem Vergleichsversuch 1 verbessert.

Vergleichsversuch 2

Eine Natronsilikatglasscheibe von 6 mm Dicke wurde mit einer Mischoxidbeschichtung aus Eisenoxid, Kobaltoxid und Chromoxid mit der Zusammensetzung 45 Gew.-% Eisenoxid, 39 Gew.-% Kobaltoxid und 16 Gew.-% Chromoxid versehen. Die Scheibe wies von der beschichteten Seite her die folgenden Werte auf:

| | |
|---|---|
| Lichtdurchlässigkeit (bezogen auf die Hellempfindlichkeit des menschlichen Auges) | = 42% |
| Transmission für die Gesamtstrahlung der Sonne | = 51% |
| Reflexion für die Gesamtstrahlung der Sonne | = 26% |
| Visuelle Reflexion in der Außenansicht (von der beschichteten Seite her gesehen) | = 32,5% |

Beispiel 2

Es wurde eine Scheibe wie im Vergleichsversuch 2 verwendet, wobei aber auf der der Mischoxidbeschichtung abgewandten Seite eine Interferenzbeschichtung der gleichen Zusammensetzung wie in Beispiel 1 angebracht wurde. Hier ergaben sich die nachfolgenden technischen Werte:

| | |
|---|---|
| Lichtdurchlässigkeit (bezogen auf die Hellempfindlichkeit des menschlichen Auges) | = 31% |
| Transmission für die Gesamtstrahlung der Sonne | = 29,5% |
| Reflexion für die Gesamtstrahlung der Sonne | = 34% |
| Visuelle Reflexion in der Außenansicht (von der beschichteten Seite her gesehen) | = 33,5% |

4

# 0 024 466

Ein Vergleich der Scheibe nach Vergleichsversuch 2 mit derjenigen nach Beispiel 2 zeigt, daß durch die zusätzliche Beschichtung die visuelle Reflexion praktisch nicht verändert wurde. Auch Farbveränderungen gegenüber der Scheibe mit lediglich der Mischmetalloxidbeschichtung sind nicht vorhanden. Demzufolge ist also bei Verwendung der Wärmereflexionsscheibe im Fensterbereich gewährleistet, optische Eindruck von Fenster- und Brüstungsbereich übereinstimmt, wenn die Brüstung des Gebäudes oder dergleichen mit Fassadenelementen der weiter oben beschriebenen Art verkleidet wird, wobei aber die sonnenschutztechnischen Werte der erfindungsgemäßen Scheibe deutlich verbessert sind.

Insgesamt zeigen die vorstehenden Beispiele, daß es durch die erfindungsgemäße Wärmereflexionsscheibe bzw. die Mehrscheibenanordnung nach der Erfindung gelingt, ohne Beeinträchtigung des Farbeindruckes der Außenansicht die Vorteile von Außen-Metalloxidschichten mit denjenigen bekannter wärmereflektierender Metallschichten zu kombinieren. Die erfindungsgemäße Kombination gibt die Möglichkeit, die Vorteile sowohl der Metalloxid-Außenbeschichtung als auch der bekannten wärmereflektierenden Metallschichten zu kombinieren, nämlich durch die überraschend einfache Maßnahme, die wärmereflektierende Metallschicht auf der dem Glasträger zugewandten Seite durch eine Interferenzschicht zu begrenzen, wodurch sich eine niedrige Reflexion sowie eine hohe Farbneutralität des wärmereflektierenden Beschichtungssystems ergeben.

**Patentansprüche**

1. Wärmereflexionsscheibe, insbesondere wärmereflektierende Fensterscheibe, mit einem transparenten Schichtträger, an dessen einer Seite eine Metalloxidschicht derartiger Zusammensetzung und Dicke angeordnet ist, daß die Reflexion im sichtbaren Spektralbereich bei Betrachtung von der Schichtseite (Außenansicht) mindestens 25%, vorzugsweise mehr als 30% beträgt und an dessen anderer Seite eine wärmereflektierende Metallschicht, z.B. eine Goldschicht, vorgesehen ist, dadurch gekennzeichnet, daß wenigstens auf der dem transparenten Schichtträger (10) zugewandten Seite der aus einer Goldschicht mit einer Dicke von mindestens 5 nm oder einer Silberschicht mit einer Dicke von 5—8 nm bestehenden wärmereflektierenden Metallschicht (18) eine Interferenzschicht (16) aus dielektrischem Material mit einem Brechungsindex >2 angeordnet ist, wobei das gesamte, auf der der Metalloxidschicht (14) abgewandten Seite des transparenten Schichtträgers (10) angeordnete Schichtsystem (20, 16, 18) so ausgebildet ist, daß eine damit rückseitig beschichtete Natronsilikatglas-Einzelscheibe in der Ansicht von der unbeschichteten Seite her farbneutral ist und im sichtbaren Spektralbereich eine Reflexion von weniger als 15%, vorzugsweise <10%, aufweist.

2. Wärmereflexionsscheibe nach Anspruch 1, dadurch gekennzeichnet, daß auf der dem transparenten Schichtträger abgewandten Seite der aus einer Goldschicht bestehenden wärmereflektierenden Metallschicht (18) an diese anschließend eine Absorptionsschicht (22) aus Chrom, Eisen, Nickel, Titan, Legierungen dieser Metalle oder aus einer Legierung der Metalle Chrom, Aluminium und Eisen angeordnet ist.

3. Wärmereflexionsscheibe nach Anspruch 2, dadurch gekennzeichnet, daß die Absorptionsschicht (22) aus einer Chrom-Nickel-Legierung mit einer Zusammensetzung von 20 Gew.-% Chrom und 80 Gew.-% Nickel besteht.

4. Wärmereflexionsscheibe nach Anspruch 2 oder 3, dadurch gekennzeichnet, daß die Dicke der Absorptionsschicht (22) zwischen 0,8 und 6 nm liegt.

5. Wärmereflexionsscheibe nach Anspruch 4, dadurch gekennzeichnet, daß die Dicke der Absorptionsschicht (22) 1,3 nm beträgt.

6. Wärmereflexionsscheibe nach einem der vorangehenden Ansprüche, dadurch gekennzeichnet, daß die Interferenzschicht(en) (16) aus Zinksulfid besteht bzw. bestehen.

7. Wärmereflexionsscheibe nach Anspruch 6, dadurch gekennzeichnet, daß zwischen dem transparenten Schichtträger (10) und der auf der ihm zugewandten Seite der wärmereflektierenden Metallschicht (18) angeordneten Zinksulfid-Interferenzschicht (16) eine dielektrische, für sichtbares Licht im wesentlichen absorptionsfreie Haftschicht (20) aus einem Metalloxid oder einem Metallmischoxid angeordnet ist, deren Dicke wesentlich kleiner ist als die Wellenlänge des sichtbaren Lichtes.

8. Verwendung der Wärmereflexionsscheibe nach einem der vorangehenden Ansprüche als Außenscheibe einer Mehrscheibenanordnung, wobei die Metalloxidschicht (14) an der dem Scheibenzwischenraum (11) abgewandten Scheibe der Wärmereflexionsscheibe angeordnet ist.

**Revendications**

1. Plaque à réflexion de chaleur, en particulier vitre réfléchissant la chaleur, comportant un support transparent de couche, sur une face duquel est disposée une couche d'oxyde métallique de composition et épaisseur telles que la reflexion dans la zone du spectre visible, considérée de la face de la couche (vue d'extérieur), est d'au moins 25%, de préférence de plus de 30% et sur l'autre face de laquelle est prévue une couche métallique réfléchissant la lumiére, par exemple une couche d'or, caractérisée par le fait qu'au moins su la face, tournée vers le support transparent (10), de la couche métallique (18) réfléchissant la chaleur, et constituée par une couche d'or d'une épaisseur d'au moins 5

5

nm ou par une couche d'argent d'une épaisseur de 5—8 nm, est disposée une couche d'interférence (16) en matériau diélectrique d'un indice de réfraction >2, l'ensemble du système des couches (20, 16, 18), disposé sur la face, écartée de la couche d'oxyde métallique (14), du support transparent (10), étant constituée de telle sorte qu'une plaque en verre silicatique de soude, revêtue sur sa face arrière par cet ensemble, est, vue du côté non revêtu, de couleur neutre et posséde, dans la zone du spectre visible, une réflexion de moins de 15%, de préférence <10%.

2. Plaque à réflexion de chaleur selon la revendication 1, caractérisée par le fait que, sur la face, écartée du support transparent, de la couche métallique (18) réfléchissant la chaleur et constituée d'une couche d'or, est disposée, en contact étroit, une couche d'absorption (22) en chrome, fer, nickel, titane, alliage de ces métaux ou un alliage des métaux chrome, aluminium et fer.

3. Plaque à réflexion de chaleur selon la revendication 2, caractérisée par le fait que la couche d'absorption (22) est constituée par un alliage chrome-nickel d'une composition de 20% en poids de chrome et 80% en poids de nickel.

4. Plaque à réflexion de chaleur selon la revendication 2 ou 3, caractérisée par le fait que l'épaisseur de la couche d'absorption (22) est comprise entre 0,8 et 6 nm.

5. Plaque à réflexion de chaleur selon la revendication 4, caractérisée par le fait que l'épaisseur de la couche d'absorption (22) est de 1,3 nm.

6. Plaque à réflexion de chaleur selon l'une des revendications précédentes, caractérisée par le fait que la (les) couche(s) d'interférence (16) est (sont) en sulfure de zinc.

7. Plaque à réflexion de chaleur selon la revendication 6, caractérisée par le fait qu'entre le support transparent (10) et la couche métallique (18) réfléchissant la chaleur, la couche d'interférence en sulfure de zinc (16) disposée sur la face, écartée de support, de la couche métallique (18) réfléchissant la chaleur, est disposée une couche d'adhérence (20) diélectrique, n'absorbant pratiquement pas la lumière visible et faite d'un oxyde métallique ou d'un oxyde mixte métallique, dont l'epaisseur est sensiblement plus petite que la longueur d'onde de la lumière visible.

8. Utilisation de la plaque à réflexion de chaleur selon l'une des revendications précédentes, comme plaque externe d'un ensemble multiplaques, la couche d'oxyde métallique (14) étant disposée sur la plaque, écartée de l'espace entre plaques intermédiaires (11) de la plaque à réflexion de chaleur.

## Claims

1. A heat-reflecting pane, more particularly a heat-reflecting window pane having a transparent substrate having on one side a metal oxide layer of a composition and thickness such that the reflection in the visible spectral range when viewed from the layer side (from the outside) is at least 25% and preferably more than 30%, the other side of the substrate having a heat-reflecting metal layer, for instance, a gold layer characterised in that an interference layer (16) made of a dielectric material having a refractory index >2 is disposed at least on the side near the transparent substrate (10) of the reflecting metal layer (18) embodied by a gold layer having a thickness of at least 5 nm or by a silver layer having a thickness of from 5 to 8 nm, the entire layer system (20, 16, 18) which is disposed on the substrate side distal from the metal oxide layer (14) being such that a single sodium silicate glass pane coated on the back with such system is neutral in colour when viewed from the uncoated side and has a reflection of <15%, preferably <10% in the visible spectral range.

2. A pane according to claim 1, characterised in that an absorption layer (22) of chromium, iron, nickel, titanium, alloys of these metals or of an alloy of chromium, aluminium and iron is disposed on the side distal from the transparent substrate of the heat-reflecting metal layer embodied by a gold layer.

3. A pane according to claim 2, characterised in that the absorption layer (22) is embodied by a chromium nickel alloy containing 20 wt.% chromium and 80 wt.% nickel.

4. A pane according to claim 2 or 3, characterised in that the thickness of the absorption layer (22) is between 0.8 and 6 nm.

5. A pane according to claim 4, characterised in that the thickness of the absorption layer (22) is 1.3 nm.

6. A pane according to any of the preceding claims, characterised in that the or each interference layer (16) is made of zinc sulphide.

7. A pane according to claim 6, characterised in that a dielectric adhesive layer (20) which is substantially non-absorbent of visible light, is made of a metal oxide or a metal mixed oxide and has a thickness considerably less than the wavelength of visible light is disposed between the transparent substrate (10) and the zinc sulphide interference layer (16) on that side of the heat-reflecting metal layer (18) which is near the substrate (10).

8. Use of the pane according to any of the preceding claims as the outside pane of a multipane arrangement, the metal oxide layer (14) being disposed on that pane of the heat-reflecting pane which is distal from the between-panes gap (11).

FIG.1

FIG.2

FIG.3